# EUROPÄISCHE PATENTSCHRIFT

(11) **EP 1 364 443 B1**
(45) Veröffentlichungstag und Bekanntmachung des Hinweises auf die Patenterteilung: **31.12.2008**
(21) Anmeldenummer: 02708212.2
(22) Anmeldetag: 06.02.2002
(51) Int. Cl.: H02K 15/14, H02K 5/15

(54) **WERKSTÜCK FÜR EIN POLGEHÄUSE EINER ELEKTRISCHEN MASCHINE**
WORKPIECE FOR A STATOR HOUSING OF AN ELECTRIC MACHINE
PIECE POUR BOITIER DE STATOR D'UNE MACHINE ELECTRIQUE

(30) Priorität: 21.02.2001 DE 10108192
(43) Veröffentlichungstag der Anmeldung: 26.11.2003
(73) Patentinhaber: ROBERT BOSCH GMBH, 70442 Stuttgart (DE)
(72) Erfinder: GEHRING, Andreas, 77815 Buehl (DE); BOHN, Roland, 77815 Buehl (DE); MUELLER, Peter, 77794 Lautenbach (DE)
(86) Internationale Anmeldenummer: PCT/DE2002/000420
(87) Internationale Veröffentlichungsnummer: WO 2002/073777

(56) Entgegenhaltungen:
- US-A- 3 567 973
- US-A- 4 877 984
- US-A- 5 297 471

## Beschreibung

### Stand der Technik

Die Erfindung geht aus von einem Werkstück nach der Gattung des Anspruchs 1. Ein solches werkstück ist aus US 3567 973 bekannt.

Bei der Herstellung von Blechteilen bspw. für Polgehäuse von elektrischen Maschinen, insbesondere von Elektrokleinmotoren, werden beim Stanzen des Blechs zwei gegenüberliegende Verstemmlaschen erzeugt, die bei der Endmontage des Polgehäuses durch radiales Verstemmen an einem Bauteil, bspw. einem Getriebegehäuse, eine Halterung zwischen Polgehäuse und Getriebegehäuse bewirken. Eine minimale Stanzbreite zwischen den Verstemmlaschen, die u.a. eine Länge der Verstemmlaschen begrenzt, hängt von der Blechdicke ab. Je dicker das Blech ist, desto grösser ist die minimale herstellbare Stanzbreite. Je kürzer die zu verbiegende Verstemmlasche ist, desto geringer ist die Überdeckung von Verstemmlasche und Bauteil. Je kleiner ein radialer Verstemmhub für die Verstemmung der Verstemmlaschen ist, desto mehr steigt die Empfindlichkeit gegen Bauteiltoleranzen des Polgehäuses oder des Bauteils, wodurch der Verstemmprozess schwierig zu beherrschen ist.

### Vorteile der Erfindung

Das erfindungsgemässe Werkstück mit den kennzeichnenden Merkmalen des Anspruchs 1 hat demgegenüber den Vorteil, dass auf einfache Art und Weise der Verstemmprozess besser beherrschbar ist.
Eine Länge der Verstemmlaschen ist dabei um die Hälfte der minimalen Stanzbreite verlängert, wodurch für das Blechpaket eine grössere Blechdicke verwendet werden kann. Bei der Verwendung des Polgehäuses als magnetischer Rückschluss wird dabei ein verbesserter magnetischer Rückschluss erreicht. Ausserdem werden durch eine grössere Blechdicke höhere axiale Haltekräfte zwischen Polgehäuse und Bauteil erreicht. Ausserdem kommt es durch die Verlängerung der Verstemmlasche zu einer grösseren Überdeckung am Getriebegehäuse, wodurch die Verbindung von Blech und Bauteilen gegenüber Toleranzen des Blechpaketes oder des Bauteils unempfindlicher wird, da ein geringerer Verstemmhub notwendig ist.

Durch die in den abhängigen Ansprüchen aufgeführten Massnahmen sind vorteilhafte Weiterbildungen und Verbesserungen des im Anspruch 1 genannten Werkstücks möglich.

Es ist vorteilhaft, wenn ein Steg zwischen den Verstemmlaschen als Sollbruchstelle wirkt, da diese auf vorteilhafte Weise zu einer Verjüngung der Verstemmlaschen an ihrem freien Ende führt und dann auf vorteilhafte Weise mit der vorteilhafterweise vorhandenen Schräge des Bauteils als Fügeschräge wirkt.

Vorteilhafterweise ist das Werkstück ein Blech oder ein Blechlaminat.

Auf vorteilhafte Weise kann das Werkstück ein Polgehäuse sein, das dann mit einem Getriebegehäuse einer elektrischen Maschine in Verbindung gebracht wird.

### Zeichnung

Ein Ausführungsbeispiel der Erfindung ist in der Zeichnung vereinfacht dargestellt und in der nachfolgenden Beschreibung näher erläutert.

### Es zeigen

Figur 1a ein Werkstück nach dem Stand der Technik, Figur 1b ein Werkstück nach dem Stand der Technik, das mit einem Bauteil verstemmt ist,
Figur 2 ein erfindungsgemässes Werkstück,
Figur 3a ein erfindungsgemässes Werkstück, das mit einem Bauteil verstemmt ist,
Figur 3b eine Aufsicht auf Figur 3a.

### Beschreibung des Ausführungsbeispiels

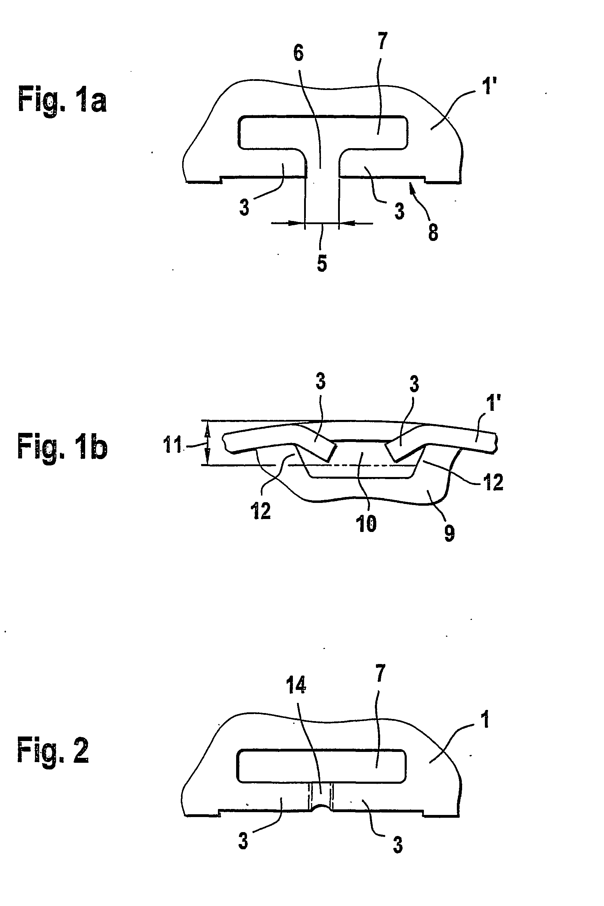

Figur 1a zeigt ein Werkstück 1' nach dem Stand der Technik. Das Werkstück 1' besteht aus einem plastisch verformbaren Material, wie z.B. aus einem Metall. Das Werkstück 1' kann insbesondere ein Blech oder ein Blechlaminat sein.
Bei dem Werkstück 1' wird bspw. zuerst eine Öffnung 7 herausgestanzt. Die Öffnung 7 kann im Querschnitt jede beliebige Form annehmen, in diesem Ausführungsbeispiel ist sie rechteckförmig. In einem weiteren Herstellungsschritt oder gleichzeitig mit der Öffnung 7 wird die Öffnung 7 hin zu einem Rand 8 des Werkstücks 1' im Form eines Durchgangs 6 geöffnet. Für diesen Durchgang 6 ist eine minimale Stanzbreite 5 erforderlich. Dadurch werden zwei Verstemmlaschen 3 an dem Werkstück 1' geschaffen, die die Öffnung 7 beiderseits des Durchgangs 6 zum Rand 8 hin begrenzen. Diese Verstemmlaschen 3 sind verbiegbar, bspw. senkrecht zur Zeichnungsebene.
Die minimale Stanzbreite 5 zwischen den Verstemmlaschen 3, die die Länge der Verstemmlaschen 3 begrenzt, hängt von der Blechdicke ab. Je dicker das Blech ist, desto grösser ist aufgrund des Stanzwerkzeugs die minimale Stanzbreite.

Figur 1b zeigt ein Werkstück 1' nach dem Stand der Technik, das an einem Bauteil 9 anliegt und mit diesem verbunden ist. Das Bauteil 9 hat in dem Bereich, in dem die Verstemmlaschen 3 des Werkstücks 1' angeordnet sind, eine Nut 10 mit aufeinander zu geneigten Seitenwänden 12 , so dass die Verstemmlaschen in die Nut 10 des Bauteils zu den Seitenwänden 12 hinein gebogen und dort bspw. verstemmt werden können. Dazu ist ein bestimmter Verstemmhub 11 notwendig. Je grösser die Verstemmung und damit die Verbindung von Werkstück 1' und Bauteil 9 sein soll, desto mehr müssen die Verstemmlaschen 3 in die Nut hineingebogen werden. Je kürzer die zu verbiegende Verstemmlasche 3 ist, desto grösser ist der dazu notwendige Verstemmhub.

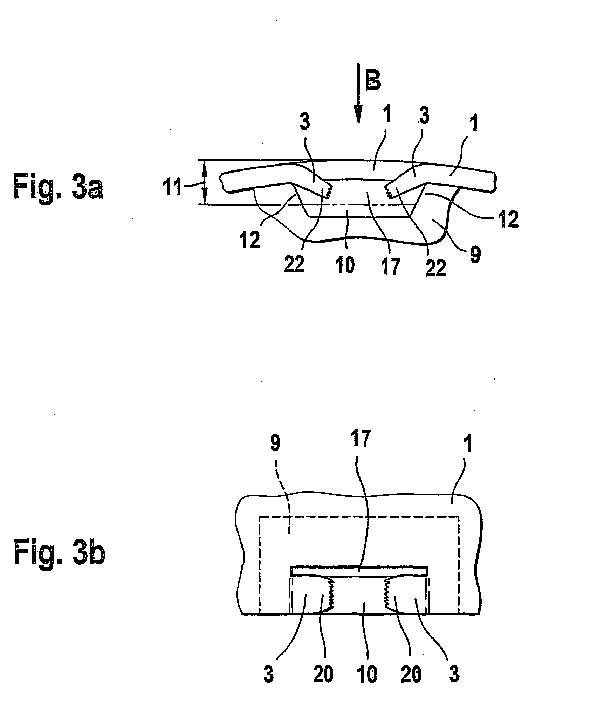

Figur 2 zeigt ein erfindungsgemässes Werkstück 1. Bei dem Werkstück 1 sind die Verstemmlaschen 3 durch einen Steg 14 miteinander verbunden. Der Steg 14 hat jedoch einen geringeren Querschnitt als die Verstemmlaschen 3 und wirkt so beispielsweise als Sollbruchstelle. Der Steg 14 wird beispielsweise durch Kerben des Blechteils hergestellt.
Beim Verbiegen der Verstemmlaschen 3 ist somit anfangs eine höhere Kraft notwendig, weil der Steg 14 auseinandergezogen werden muss. Beim Verbiegen schnürt sich das Material an der Sollbruchstelle des Stegs 14 ein. Bei weiterer Verformung bricht der Steg 14 auf und die Verstemmlaschen 3 werden wie beim Stand der Technik in eine Nut 10 des Bauteils 9 zu den Seitenwänden 12 gebogen und verstemmt. Jede Verstemmlasche 3 ist gegenüber dem Stand der Technik verlängert. Die an einem freien Ende 22 der Verstemmlasche 3 eingeschnürte Bruchstelle mit der Verjüngung 20 (Fig. 3b) wirkt dabei als Fügeschräge.

Figur 3a zeigt ein erfindungsgemässes Werkstück 1, das an einem Bauteil 9 anliegt und mit diesem verstemmt ist. Durch den Steg 14 sind die Verstemmlaschen 3 verlängert worden, so dass ein kürzerer Verstemmhub 11 notwendig ist, um eine mit dem Stand der Technik vergleichbare Überdeckung mit dem Bauteil 9 zu erreichen.

Figur 3b zeigt eine Draufsicht auf das Werkstück 1 und das Bauteil 9 in Richtung B der Figur 3a. Im Hintergrund ist das Bauteil 9 zu erkennen, auf dem das erfindungsgemässe Werkstück 1 aufliegt. Die Verstemmlaschen 3 haben an ihrem freien Ende 22 jeweils die Verjüngung 20, die sich beim Einschnüren des Stegs 14 gebildet hat. Das Bauteil 9 hat in der Nut 10 an deren Rückwand bspw. eine Schräge 17, die senkrecht zur Verstemm/Verbiegungsrichtung ausgebildet ist und im Bereich des freien Endes 22 der verbogenen Verstemmlasche 3 am höchsten ist, so dass es beim Verstemmen der Stemmlaschen 3 in die Nut 10 hinein zu einer Verstemmung mit dem Bauteil 9 durch die Schräge 17 kommt. Durch die Verjüngung 20 der Verstemmlaschen 3 ist beim Verstemmen der Verstemmlaschen 3 auf die Schräge 17 ein guter Übergang am Anfang des Verstemmprozesses möglich.

## Patentansprüche

1. Werkstück, das zwei Verstemmlaschen hat, und aus einem plastisch verformbaren Material besteht, wobei die Verstemmlaschen (3) durch einen Steg (14) miteinander verbunden sind, **dadurch gekennzeichnet, dass** der Steg (3) vor einem Verbiegen der Verstemmlaschen (3) einen kleineren Querschnitt als die Verstemmlaschen (3) hat und der Steg (14) eine Sollbruchstelle bildet, wenn die Verstemmlaschen (3) verbogen werden.

2. Werkstück nach Anspruch 1, **dadurch gekennzeichnet, dass** der Steg (14) brechbar ist, und dass die Verstemmlaschen (3) verbiegbar sind, und dass die Verstemmlaschen (3) mit einem Bauteil (9) verstemmbar sind.

3. Werkstück nach Anspruch 1, **dadurch gekennzeichnet, dass** der Steg (14) durch Kerben eines Blechteils hergestellt ist.

4. Werkstück nach Anspruch 1, **dadurch gekennzeichnet, dass** das Werkstück (1) ein Blech oder ein Blechlaminat ist.

5. Werkstück nach Anspruch 1 oder 4, **dadurch gekennzeichnet, dass** das Werkstück (1) ein Polgehäuse einer elektrischen Maschine ist.

6. Werkstück nach Anspruch 1, **dadurch gekennzeichnet,**
**dass** das Werkstück (1) an einem Bauteil (9) angeordnet ist, und dass das Bauteil (9) eine Nut (10) hat, in die Verstemmlaschen (3) hingebogen sind, und dass die Nut (10) eine Schräge (17) hat, auf die die Verstemmlaschen (3) aufgeschoben werden.

7. Werkstück nach Anspruch 1, **dadurch gekennzeichnet, dass** die Verstemmlasche (3) an ihrem freien Ende (22) eine Verjüngung (20) aufweist, die teilweise durch den Steg (14) gebildet ist, wenn der Steg (14) die Verstemmlaschen (3) nicht mehr verbindet.

8. Elektrische Maschine mit einem Werkstück nach einem der vorhergehenden Ansprüche, mit einem Poltopf, der zwei Verstemmlaschen aufweist, und aus einem plastisch verformbaren Material besteht, wobei die Verstemmlaschen (3) durch einen Steg (14) miteinander verbunden sind, **dadurch gekennzeichnet, dass** der Steg (3) vor einem Verbiegen der Verstemmlaschen (3) einen kleineren Querschnitt als die Verstemmlaschen (3) hat, und der Steg (14) eine Sollbruchstelle bildet, wenn die Verstemmlaschen (3) verbogen werden.

9. Verfahren zum Verstemmen eines Werkstücks (1) mit einem Bauteil (9), wobei das Werkstück (1) zwei Verstemmlaschen (3) aufweist, und aus einem plastisch verformbaren Material besteht, wobei die Verstemmlaschen (3) durch einen Steg (14) miteinander verbunden sind, der eine Sollbruchstelle bildet, wobei sich beim Verbiegen der Verstemmlaschen (3) das Material an der Sollbruchstelle einschnürt und bei weiterer Verformung der Steg (14) bricht, wodurch an den freien Enden der Verstemmlaschen (3) durch die Einschnürung der Sollbruchstelle Verjüngungen (20) ausgeformt werden.

10. Verfahren nach Anspruch 9, wobei als Werkstück (1) ein Poltopf einer elektrischen Maschine mit einem Bauteil (9), beispielsweise einem Getriebegehäuse, verbunden wird.

## Claims

1. Workpiece which has two caulking tabs and consists of a plastically deformable material, the caulking tabs (3) being connected to one another by means of a web (14), **characterized in that,** before a bending of the caulking tabs (3), the web (3) has a smaller cross section than the caulking tabs (3), and the web (14) forms a predetermined breaking point when the caulking tabs (3) are bent.

2. Workpiece according to Claim 1, **characterized in that** the web (14) is breakable, and **in that** the caulking tabs (3) are bendable, and **in that** the caulking tabs (3) can be caulked by means of a component (9).

3. Workpiece according to Claim 1, **characterized in that** the web (14) is produced by the notching of a sheet-metal part.

4. Workpiece according to Claim 1, **characterized in that** the workpiece (1) is a sheet metal or a sheet-metal laminate.

5. Workpiece according to Claim 1 or 4, **characterized in that** the workpiece (1) is a pole casing of an electric machine.

6. Workpiece according to Claim 1, **characterized in that** the workpiece (1) is arranged on a component (9), and **in that** the component (9) has a groove (10) into which caulking tabs (3) are bent, and **in that** the groove (10) has a slope (17) onto which the caulking tabs (3) are pushed.

7. Workpiece according to Claim 1, **characterized in that** the caulking tab (3) has at its free end (22) a taper (20) which is formed partially by the web (14) when the web (14) no longer connects the caulking tabs (3).

8. Electric machine having a workpiece according to one of the preceding claims, with a pole pot which has two caulking tabs and consists of a plastically deformable material, the caulking tabs (3) being connected to one another by means of a web (14), **characterized in that,** before a bending of the caulking tabs (3), the web (3) has a smaller cross section than the caulking tabs (3), and the web (14) forms a predetermined breaking point when the caulking tabs (3) are bent.

9. Method for caulking a workpiece (1) with a component (9), the workpiece (1) having two caulking tabs (3) and consisting of a plastically deformable material, the caulking tabs (3) being connected to one another by means of a web (14) which forms a predetermined breaking point, the material at the predetermined breaking point contracting during the bending of the caulking tabs (3), and the web (14) breaking during further deformation, with the result that tapers (20) are formed at the free ends of the caulking tabs (3) as a result of the contraction of the predetermined breaking point.

10. Method according to Claim 9, a pole pot of an electric machine being connected to a component (9), for example a gear case as a workpiece (1).

## Revendications

1. Pièce, présentant deux pattes de matage, et se composant d'un matériau déformable plastiquement, les pattes de matage (3) étant connectées mutuellement par une nervure (14), **caractérisée en ce que** la nervure (3) présente une plus petite section transversale que les pattes de matage (3) avant une flexion des pattes de matage (3), et la nervure (14) forme une zone de rupture lorsque les pattes de matage (3) sont fléchies.

2. Pièce selon la revendication 1, **caractérisée en ce que** la nervure (14) est cassable et **en ce que** les pattes de matage (3) peuvent être fléchies, et **en ce que** les pattes de matage (3) peuvent être matées avec un composant (9).

3. Pièce selon la revendication 1, **caractérisée en ce que** la nervure (14) est fabriquée par entaillage d'une pièce de tôle.

4. Pièce selon la revendication 1, **caractérisée en ce que** la pièce (1) est une tôle ou un stratifié de tôle.

5. Pièce selon la revendication 1 ou 4, **caractérisée en ce que** la pièce (1) est un boîtier de stator d'une machine électrique.

6. Pièce selon la revendication 1, **caractérisée en ce que** la pièce (1) est disposée sur un composant (9) et **en ce que** le composant (9) présente une rainure (10) dans laquelle les pattes de matage (3) sont fléchies, et **en ce que** la rainure (10) présente un chanfrein (17) sur lequel les pattes de matage (3) sont poussées.

7. Pièce selon la revendication 1, **caractérisée en ce que** la patte de matage (3) présente à son extrémité libre (22) un rétrécissement (20) qui est formé en partie par la nervure (14) lorsque la nervure (14) ne relie plus les pattes de matage (3).

8. Machine électrique comprenant une pièce selon l'une quelconque des revendications précédentes, comprenant un pot de stator qui présente deux pattes de matage et qui se compose d'un matériau déformable plastiquement, les pattes de matage (3) étant connectées mutuellement par une nervure (14), **caractérisée en ce que** la nervure (14) présente une plus petite section transversale que les pattes de matage (3) avant une flexion des pattes de matage (3), et la nervure (14) forme une zone de rupture lorsque les pattes de matage (3) sont fléchies.

9. Procédé pour mater une pièce (1) avec un composant (9), la pièce (1) présentant deux pattes de matage (3) et se composant d'un matériau déformable plastiquement, les pattes de matage (3) étant connectées mutuellement par une nervure (14), qui forme une zone de rupture, dans lequel le matériau se comprime lors du fléchissement des pattes de matage (3) au niveau de la zone de rupture, et en cas de déformation supplémentaire, la nervure (14) se casse, de sorte que des rétrécissements (20) soient formés aux extrémités libres des pattes de matage (3) par la constriction de la zone de rupture.

10. Procédé selon la revendication 9, dans lequel, en tant que pièce (1), un pot de stator d'une machine électrique est connecté à un composant (9), par exemple un boîtier de stator.
